# EUROPÄISCHE PATENTSCHRIFT

(11) **EP 0 313 583 B1**
(45) Veröffentlichungstag und Bekanntmachung des Hinweises auf die Patenterteilung: **10.01.1996**
(21) Anmeldenummer: 87905592.9
(22) Anmeldetag: 31.08.1987
(51) Int. Cl.: F02B 3/08

(54) **BRENNSTOFFEINSPRITZUNG FÜR D.I.-DIESELMOTOR MIT MEHREREN DÜSEN**
FUEL INJECTION FOR DIRECT-INJECTION DIESEL ENGINE
INJECTION DE CARBURANT POUR MOTEUR DIESEL A INJECTION DIRECTE

(30) Priorität: 29.08.1986 DE 3629437
(43) Veröffentlichungstag der Anmeldung: 03.05.1989
(73) Patentinhaber: Elsbett, Ludwig, D-91161 Hilpoltstein (DE); Elsbett, Günter, D-91161 Hilpoltstein (DE); Elsbett, Klaus, D-91161 Hilpoltstein (DE)
(72) Erfinder: Elsbett, Ludwig, D-91161 Hilpoltstein (DE); Elsbett, Günter, D-91161 Hilpoltstein (DE); Elsbett, Klaus, D-91161 Hilpoltstein (DE)
(74) Vertreter: Matschkur, Götz, Lindner Patent- und Rechtsanwälte
(86) Internationale Anmeldenummer: DE8700390
(87) Internationale Veröffentlichungsnummer: WO8801683

(56) Entgegenhaltungen:
- EP-A- 0 028 287
- CH-A- 96 739
- DE-A- 2 841 972
- DE-A- 3 214 096
- DE-A- 3 343 677
- DE-C- 854 862
- FR-A- 1 414 354
- GB-A- 609 115
- GB-A- 2 051 236
- J.J. BROEZE: "Combustion in Piston Engines", De Technische Uitgeverij H. Stam N.V., (Haarlem, NL), siehe seite 116, Abschnitt 238; figuren 92,
- Engineers Digest, Band 35, Nr. 8, August 1974, (London, GB), "New Combustion System Reduces Diesel-Engine Noise and Gaseous Emissions", seite 21

## Beschreibung

Die Erfindung betrifft ein Verfahren zum Betreiben eines direkteinspritzenden Dieselmotors gemäß Oberbegriff des Patentanspruchs 1.

Die Brennstoffeinspritzung bei Kolbenbrennkraftmaschinen mittels mehrerer Einspritzdüsen dient im allgemeinen der Einbringung verschiedener Brennstoffe oder der Variierung der Einspritzmenge mit Hilfe der verschiedenen zu- oder abschaltbaren Düsen oder einer gleichmäßigen Verteilung des Brennstoffes im Brennraum.

Vorliegende Anmeldung beschäftigt sich mit den anzustrebenden Druck-/Temperaturgegebenheiten und den Einspritzbedingungen bei einem direkteinspritzenden Dieselmotor, um wichtige Emissionen zu reduzieren. Es handelt sich um einen Verfahrensvorschlag für die dieselmotorische Arbeitsweise, wobei die Vorschläge auf der Grundlage eines duothermischen Arbeitsverfahrens gemacht werden, da auf Grundlage dieses Verfahrens in Praxisversuchen die Reduktion der Emissionen gemessen wurden. Für weitere Anwendungs- und Verfahrensfälle dürfte eine Übertragbarkeit der gewonnenen Erkenntnisse und der gegebenen Lehre vorliegen.

Die zunehmend restriktiver gehandhabten Höchstwerte für Emissionen für Brennkraftmaschinen betreffen die dieselmotorische Arbeitsweise v. a. bezüglich Lärm- und Ruß-/Partikelemission. Im weiteren wird gezeigt, welche Verknüpfung zwischen beiden Emissionsarten besteht. Was die Ruß-/Partikelemissionen anlangt, treten besonders Probleme bei schwer verdampfbaren Brennstoffen auf. Deswegen wurden nachfolgend geschilderte Verfahrensschritte für schwer verdampfbare Brennstoffe bis hin zu Pflanzenfetten konzipiert und durchexperimentiert. Gerade für Pflanzenfette hat sich gezeigt, daß nach Lösung des Problems der Verdampfung des Brennstoffes eine Reihe von Vorteilen für diesen Brennstoff sprechen, da er als nachwachsender Rohstoff in seiner CO₂-Bilanz neutral ist und keine SO₂- oder Benzol(derivaten)emission kennt.

Verfahren der eingangs genannten Art, bei denen im Motorbetrieb mehrere Einspritzdüsen verwendet werden, sind bekannt (DE-A-3 214 096 und DE-C-854 862). Nach der erstgenannten Druckschrift DE-A-3 214 096 ist der Kraftstoff durch Wirbel längs der Innenwand der Brennkammer zu fördern, damit die Strecke in der Brennkammer, bis zu der der eingespritzte Kraftstoff die Innenwand der Brennkammer berührt erhöht wird. Auch nach der zweitgenannten Druckschrift DE-C-854 862 soll eine annähernd gleichmäßig um den Schwerpunktkreis einer Wirbelung verteilte Mischung von Kraftstoff und Luft im Brennraum erreicht werden. Diese gleichmäßige Verteilung soll sich ebenfalls bis zur äußeren Grenze des Brennraumes erstrecken.

Ferner sind bereits Möglichkeiten der Verringerung von Lärmemissionen durch geringe Drucksteigerungen bei der Verbrennung erwähnt (DE-A-3 343 677, Engineers digest, Band 35, Nr. 8, August 1974, Seite 21).

Für die dieselmotorische Arbeitsweise besteht die Aufgabenstellung also darin, eine Lösung zu finden, die Verminderung der Ruß-/Partikelemission erreicht, jedoch auch die Larm-/Schallemission begrenzt.

Bei dem lösungsmaßig nun vorliegenden Verbrennungsverfahren wurde eine Vervielfachung der Einstrahl-Einspritzdüsen mit Drosselzapfen vorgenommen, wobei zwei oder mehrere solcher Düsen verwendet werden können, mit dem Ziel, den Mischvorgang und damit die Einspritzzeit zu verkürzen. Die Notwendigkeit der Beschleunigung des Mischvorganges hat folgende Ursache: Ruß-/Partikel entstehen dadurch, daß der flüssige Brennstoff in den Brennraum auch dann noch eingebracht wird, wenn der Brennvorgang bereits abläuft, also flüssige, gasförmige und bereits brennende Brennstoffanteile über längere Zeit gleichzeitig nebeneinander existieren, weil die übliche Einspritz- und Mischzeit dies bedingt. Das ergibt zwangsläufig die Gefahr, daß von dem in das laufende Brennverfahren eingebrachten flüssigen Brennstoff, soweit er aus Kohlenwasserstoffen besteht, in seiner verspäteten Gasphase lediglich noch der Wasserstoff abgespalten werden kann, während der Kohlenstoff als unverbrannter Ruß sichtbar wird.

Als erster Verfahrensschritt ist also eine Erhöhung der Mischgeschwindigkeit bzw. eine Verminderung der Einspritzzeit notwendig, damit während der Einspritzung der zuletzt eingebrachte flüssige Brennstoff bereits verdampft ist, ehe der vorher eingebrachte Brennstoff schon so hohe Verbrennungstemperaturen erzeugt hat, daß die Gefahr der Rußentstehung für den zuletzt eingebrachten Brennstoff gegeben ist. Hat der gesamte Brennstoff die Gasphase erreicht, bevor zu hohe Brenntemperaturen entstehen, entfällt das Problem der Rußbildung. Vermieden wird, daß ein wesentlicher Temperaturanstieg der Arbeitsluft während der Einspritzzeit entsteht, wenn die Mischgeschwindigkeit von Luft und Brennstoff erhöht ist, die Einspritzzeit hingegen vermindert ist.

Wird außerdem als nächste wichtige Verfahrensvoraussetzung die Brennzone im Zentrum des gegebenen Brennraumes konzentriert, kann mit mehreren Einspritzdüsen der so beschleunigte Mischvorgang voll genutzt werden und ein tatsächlich sehr schnelles Verdampfen des Brennstoffes erreicht werden. Damit nämlich der flüssige Brennstoff nicht mit der Brennzone in Berührung kommt, war bereits früher einmal eine Brennstoffverdampfung an den Brennraumwänden vorgeschlagen worden, d. h. der Brennstoff sollte als Film auf die Wand des Brennraumes aufgetragen werden und von dort in Dampfform in die Brennraumluft und Brennzone übergehen. Obwohl hier der flüssige Brennstoff nicht in Berührung mit den brennenden Gasen gelangt, entstand bei diesem Verfahren statt Ruß eine erhöhte CH-Emission in Form von Aldehyden etc.

Beide Schritte, die Erhöhung der Mischgeschwindigkeit von Luft und Brennstoff wie auch die Errichtung einer zentralen, luftumgebenen Brennzone sind also Verfahrensvoraussetzung, wobei gerade die Konzentration auf den kleinstmöglichen Luftanteil notwendig ist, da eine stöchiometrische Mischung von Luft und Brennstoff keinen überschüssigen Sauerstoff zur unerwünschten NOx-Bildung bereithält. Die optimale Konzentration auf den kleinstmöglichen Luftanteil erfolgt durch die Trennung von Verbrennungs- und Überschußluft, wobei in dem entstehenden duothermischen Verfahren die Überschußluft und die Verbrennungsluft einer starken Rotation ausgesetzt sind (zu diesem Verfahren vgl. DE-C 22 41 355, GB-A 2 000 222, DE-A 33 43 677).

Die Rotation der Brennraumluft wird so hoch bemessen, daß die von außen vom Brennraumrand nach innen, zur Brennzone hin, eingespritzten Kraftstoffmengen umgelenkt werden, bevor sie die gegenüberliegende Brennraumwand erreichen. Der Brennstoff wird also im heißesten Teil der Brennraumluft in Schwebe gehalten, bis er verdampft ist. Dieses Verfahren muß umso exakter beachtet werden, je schwerer verdampfbar der Kraftstoff ist. Dies ist bei Pflanzenfetten der Fall. Ist jedoch Pflanzenfett gänzlich verdampft, ehe die Hauptverbrennung beginnt, können sich die Vorteile des Pflanzenfettes hinsichtlich der molekularen Struktur der Kohlenwasserstoffe im weiteren Brennvorgang voll entfalten. Die kettenförmige Kohlenwasserstoffanordnung eignet sich ausgezeichnet für eine rauchfreie Verbrennung.

Als dritte Verfahrensvoraussetzung ist die Drucksteigerung während des Verbrennungsvorgangs zu beachten. Bei dem gegebenen schnellen Mischvorgang mit mehreren Drosselzapfendüsen und dem schnellen Verdampfungsvorgang in der isolierten duothermischen Brennzone darf die Drucksteigerung im Zylinder während der Verbrennung keine unzulässige Geräuschentwicklung hervorrufen. Die Druckzunahme pro Grad Kurbelwinkel der Kurbelwelle (Δp/Δα) darf eine gewisse Grenze nicht überschreiten. Für den Gebrauchswert des Dieselmotors sind Geräuscharmut und Rußfreiheit heute gleich konstitutiv und wichtig. Deswegen muß in der Zusammenschau beider Probleme neben dem Ziel der beschleunigten Einspritzung und Mischung von Luft und Brennstoff ein zweiter Parameter definiert sein, der das Verfahren zwar wirksam, aber auch geräuscharm macht.

Die unzulässige Geräuschentwicklung kann dadurch vermieden werden, daß die Drucksteigerungsgeschwindigkeit während des Brennvorganges durch eine spate Einspritzung auf den maximalen Wert des Kompressionsvorganges reduziert bleibt. Die übliche Formel des dieselmotorischen Brennverfahrens auf Gleichdruck während des Brennvorganges ändert sich somit dahingehend, daß nicht der Druck im Zylinder, sondern die Drucksteigerungsgeschwindigkeit während der Befeuerung des Zylinders konstant bleibt. Die konstante Drucksteigerungsgeschwindigkeit in der befeuerten Zeit des Zylinders entsprechend der maximalen Drucksteigerung des Kompressionshubes wird während des gesamten Verbrennungsvorganges dadurch erzielt, daß die mit mehreren Düsen eingebrachte große Kraftstoffmenge während ihrer zunehmend raschen Verbrennung die durch den Expansionshub des Kolbens gegebene abfallende Drucksteigerung ausgleicht. Je spater die Einspritzung vorgenommen werden soll, umso schneller muß der Mischvorgang mit entsprechend vielen Düsen vollzogen werden.

Die konstante Drucksteigerung, d. h. die Regelung von Einspritzzeit und Einspritzmenge wird mit Hilfe der Düsenzapfencharakteristik der Drosselzapfendüse bewerkstelligt, einschließlich einer notwendigen Voreinspritzung, wie dies Stand der Technik ist.

Eine intensive Ladeluftkühlung ergibt zu diesem Verfahren eine wertvolle Ergänzung, da es gut ist, einen großen Temperaturunterschied zwischen Brennzonenluft und Überschußluft zu erreichen. Letzteres ist auch vorteilhaft zur Unterdrückung der NOx-Bildung, wobei zur NOx-Minderung auch der späte Einspritzbeginn des Verfahrens von Vorteil ist.

Um bei der Abstimmung von Einspritzdruck und -zeit mehr Möglichkeiten zu haben, wurde erstmals eine Bohrung quer durch den Zylinderkopf angebracht, die so groß ist, daß durch sie hindurch die zweite Einspritzleitung der um 180° versetzten zweiten Einspritzdüse geführt werden kann. Möglich wurde diese Maßnahme dadurch, daß für das vorliegende Verfahren ein Zylinderkopf verwendet wurde, der lediglich mit Hilfe weniger Bohrungen mit dem Motoröl gekühlt wird. Durch den Wegfall der Kühlräume, die normalerweise für die Wasserkühlung vorhanden sind, wurde diese Lösung für die Bohrung für die Einspritzleitung möglich.

Weitere Einzelheiten, Merkmale und Vorteile auf der Basis der Erfindung ergeben sich aus den Unteransprüchen und der nachfolgenden Beschreibung bevorzugter Ausführungsbeispiele der Erfindung sowie anhand der Zeichnungen. Diese zeigen in
- Fig. 1: eine schematische Draufsicht auf den Brennraum eines Direkteinspritzers mit einer Düse nach dem Stand der Technik,
- Fig. 2: eine entsprechende Ansicht auf den Brennraum eines Direkteinspritzers nach der Erfindung,
- Fig. 3: ein Diagramm, in dem der Druck im Zylinder über den Kurbelwellenwinkel aufgetragen ist,
- Fig. 4: ein Diagramm, in dem der Druck im Zylinder pro Grad Kurbelwinkel der Kurbelwelle über den Kurbelwellenwinkel aufgetragen ist, und
- Fig. 5: im schematischen Axialschnitt einen erfindungsgemäßen Zylinderkopf.

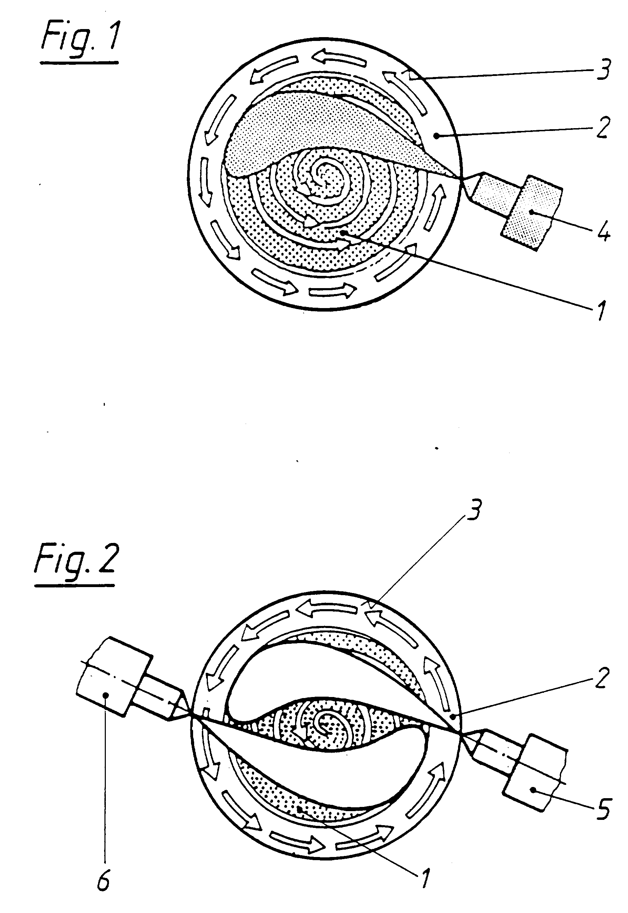

Fig. 1 zeigt den Stand der Technik bezuglich des duothermischen Brennverfahrens. Die in einem Drall befindliche Luft des Brennraumes (1) und (2) ist durch die Brennraumwand (3) begrenzt. Nach dem Einspritzen mittels einer EinstrahlZapfenduse (4), deren Strahl aufgrund des starken Dralls die gegenüberliegende Seite nicht erreicht, bilden sich zwei Zonen (1) und (2). Zone (1) bildet die Brennzone mit einem stöchiometrischen Luft-/Brennstoffgemisch, Zone (2) bildet die Überschußluft, die an der Verbrennung nicht teilnimmt und gleichzeitig als Isolationsmantel zwischen heißer Brennzone und kühler Brennraumwand (3) wirkt.

Fig. 2 zeigt stellvertretend für die Verwendung mehrer Einstrahl-Zapfendüsen den Fall für zwei solcher Düsen (5) und (6). Die Strahllage wird beibehalten; die duothermische Anordnung von Brennzone (1) und Überschußluft (2) wird wie in Fig. 1 gebildet, indem der eingespritzte Brennstoff beider Düsen die Brennraumwand (3) nicht erreicht. Fig. 2 zeigt auch, daß in der gleichen Zeit bei gleicher Drallgeschwindigkeit der Luft bereits die gesamte Brennzone mit Brennstoff versorgt ist, während Fig. 1 nur den halben Mischvorgang vollzogen hat. Anders ausgedrückt halbiert sich die Mischzeit bei Verdoppelung der Düsen, bzw. beträgt ein Drittel bei drei Düsen etc.

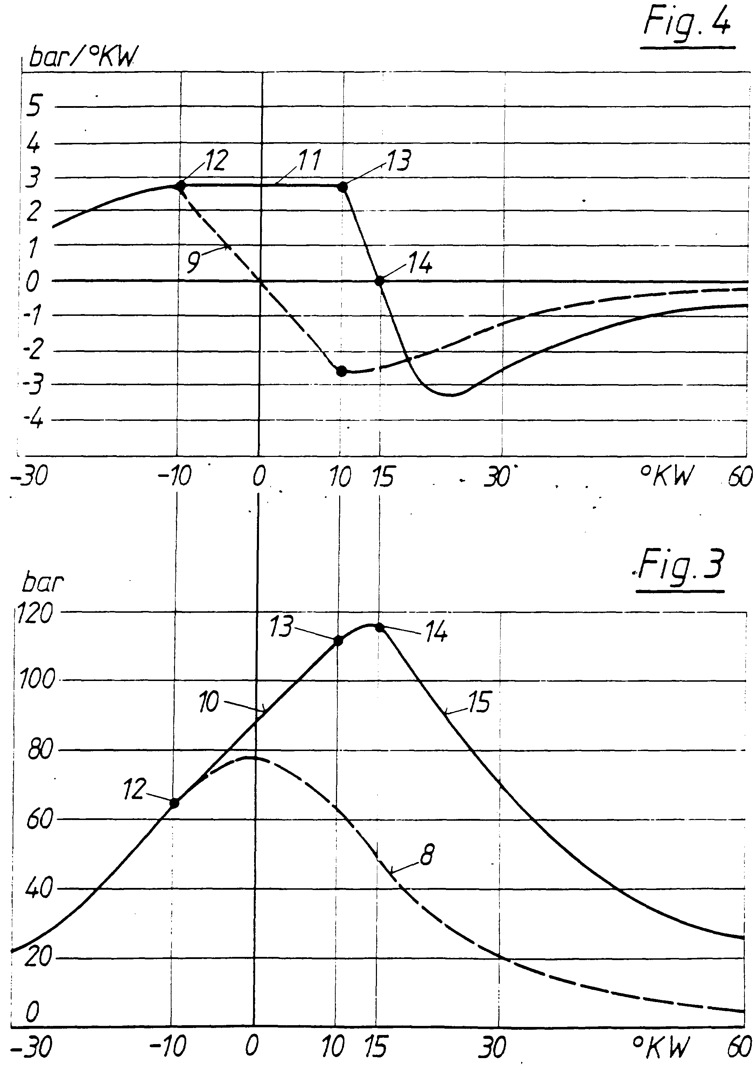

Das Diagramm von Fig. 3 trägt auf der Ordinate den Druck im Zylinder, auf der Abszisse ° Kurbelwinkel der Kurbelwelle auf. Fig. 4 trägt auf der Ordinate den Druck im Zylinder pro ° Kurbelwinkel der Kurbelwelle, auf der Abszisse ° Kurbelwinkel der Kurbelwelle auf. Fig. 3 stellt den mit mehreren Einspritzdüsen möglichen und wegen der Geräuschemission anzustrebenden Druckverlauf im Zylinder dar, und zwar entsprechend der in Fig. 4 dargestellten Beziehung einer konstant verlaufenden Drucksteigerung Δp/Δα von 2,8 bar pro ° Kurbelwinkel von Punkt (12) nach Punkt (13). Den Druckverlauf des unbefeuerten Motors zeigt die Kurve (8) in Fig. 3 und die Drucksteigerung des unbefeuerten Motors die Kurve (9) in Fig. 4.

Gegenstand des erfindungsgemäßen Druckverlaufs ist die Linie (10) in Fig. 3 und (11) in Fig. 4 zwischen den Punkten (12) und (13). Die Drucksteigerung von Punkt (12) zu Punkt (13) ist ungefähr konstant. Die Linie von Punkt (13) zu Punkt (14) entspricht der auslaufenden Verbrennung, der sich die gesetzmaßige Expansionslinie (15) anschließt.

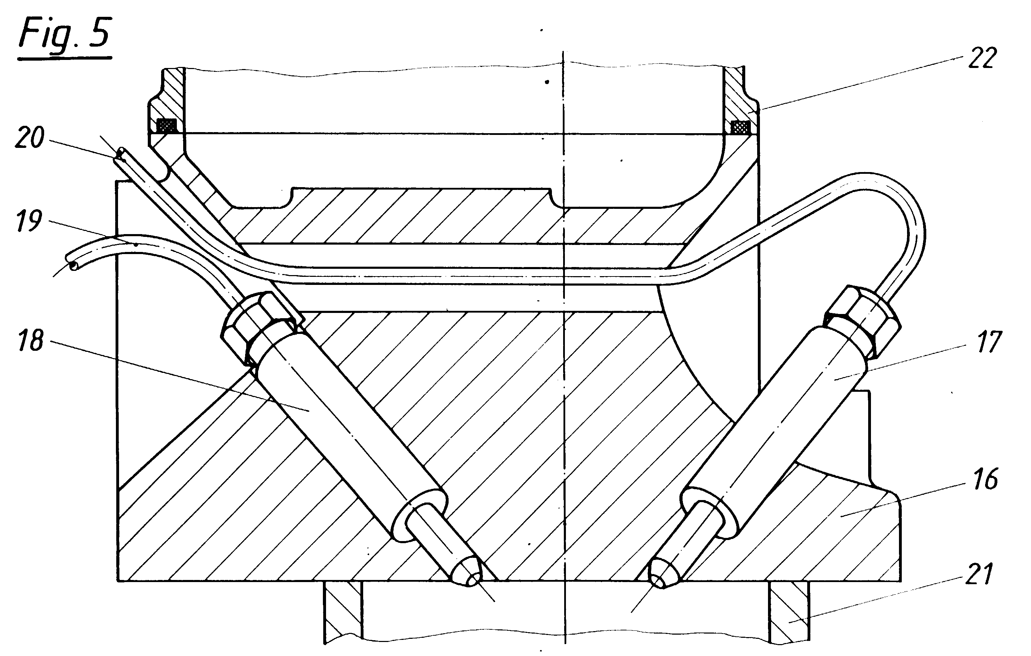

Fig. 5 zeigt einen Zylinderkopf (16) für zwei Einspritzdüsen (17) und (18). Der Zylinderkopf wird unten vom Zylinder (21), oben vom Zylinderkopfdeckel (22) begrenzt. Die Brennstoffleitung (19) ist direkt an die Düse herangeführt, die Brennstoffleitung (20) zur zweiten Düse ist in einer Bohrung durch den Zylinderkopf geführt.

## Patentansprüche

1. Verfahren zum Betreiben eines direkteinspritzenden Dieselmotors mit mehrben Einspritzdüsen, bei dem die Luft im Brennraum (1,2) in Rotation versetzt und zur Beschleunigung des Mischvorganges durch eine derartige Anzahl von Einspritzdüsen (5,6) mit Brennstoff versorgt wird, daß auch Brennstoffe wie schwer verdampfbare Pflanzenöle verdampft sind, bevor im Brennraum (1,2) Temperaturen erreicht werden, die zur Rußbildung führen, dadurch gekennzeichnet, daß ein duothermisches Brennverfahren verwendet wird, wobei eine zentrale, von einer Zone (2) mit kälterer Überschußluft umgebene Brennzone (1) errichtet wird, indem die Rotation der Brennraumluft so hoch bemessen wird, daß der von außen vom Brennraumrand nach innen zur Brennzone (1) eingespritzte Brennstoff umgelenkt wird, bevor er die gegenüberliegende Brennraumwand (3) erreicht, und dabei so lange in Schwebe gehalten wird, bis auch schwer verdampfbare Brennstoffe bis zur völligen Verdampfung von der Brennraumwand (3) ferngehalten sind, und daß zur Verminderung der Schallemission das Einspritzgesetz für die Einspritzdüsen (5,6) so gewählt ist, daß der Druckanstieg während der Verbrennung pro Grad Kurbelwinkel nicht größer als die maximale Drucksteigerungsrate (Δp/Δα) während des Kompressionshubes ist.

2. Verfahren nach Anspruch 1, dadurch gekennzeichnet, daß von den Einspritzdüsen (5, 6) mindestens eine einen Drosselzapfen zur Steuerung des Einspritzquerschnittes aufweist.

3. Verfahren nach Anspruch 2, dadurch gekennzeichnet, daß der Einspritzbeginn der Einspritzdüsen (5, 6) zeitlich versetzt und mit Hilfe des steuerbaren Einspritzquerschnittes aufgrund des Drosselzapfens auf einen konstanten Verlauf der Drucksteigerung (Δp/Δα) eingestellt wird.

4. Verfahren nach Anspruch 3, dadurch gekennzeichnet, daß der zeitliche Versatz des Einspritzbeginns der Einspritzdüsen (5, 6; 17, 18) durch verschieden lange Brennstoff-Einspritzleitungen (19, 20) erzeugt wird.

5. Verfahren nach einem der vorangehenden Ansprüche, dadurch gekennzeichnet, daß zum Zwecke der Leitungslängenabstimmung eine oder mehrere Brennstoff-Einspritzleitungen (19, 20) durch eine Bohrung im Zylinderkopf (16) geführt werden.

6. Verfahren nach einem der vorangehenden Ansprüche, dadurch gekennzeichnet, daß die Temperaturdifferenz zwischen der Verbrennungsluft und der um die Brennzone (1) rotierenden Überschußluft (2) durch Aufladung und Ladeluftkühlung verstärkt wird.

7. Verfahren nach einem der vorangehenden Ansprüche, dadurch gekennzeichnet, daß der Motor lediglich mit Schmierbzw. Motoröl gekühlt wird.

8. Verfahren nach einem der vorangehenden Ansprüche, dadurch gekennzeichnet, daß während der Befeuerung des Zylinders die Drucksteigerungsgeschwindigkeit konstant gehalten wird.

## Claims

1. Method of operating a direct-injection diesel motor having a plurality of injection nozzles, in which the air in the combustion chamber (1, 2) is set in rotation and, in order to accelerate the mixing process, is supplied with fuel through a sufficient number of injection nozzles (5, 6) that even fuels such as low-volatility vegetable oils vaporise before temperatures are reached in the combustion chamber (1, 2) which lead to the formation of soot, characterised in that a duothermal combustion method is used, wherein a central combustion zone (1) is set up, surrounded by a zone (2) of relatively cold excess air, the rotation of the combustion chamber air being sufficiently fast that the fuel injected from outside from the combustion chamber edge inward to the combustion zone (1) is deflected before it reaches the opposite combustion chamber wall (3), and is thus held in suspension for sufficiently long to alloy low-volatility fuels to be kept away from the combustion chamber wall (3) until fully vaporised, and in that in order to reduce the noise emission the injection ratio for the injection nozzles (5, 6) is such that the pressure rise during combustion is not greater, per degree of the crank angle, than the maximum pressure increase gradient (Δp/Δα) during the compression stroke.

2. Method according to claim 1, characterised in that, at least one of the injection nozzles (5, 6) has a throttle pin to control the injection aperture.

3. Method according to claim 2, characterised in that the start of injection by the respective injection nozzles (5, 6) is staggered at intervals and is set to a constant pressure increase gradient (Δp/Δα) by means of the adjustable injection aperture afforded by the throttle pin.

4. Method according to claim 3, characterised in that staggering of the times for the start of injection by the respective injection nozzles (5, 6; 17, 18) is achieved by the different lengths of the respective fuel injection pipes (19, 20).

5. Method according to one of the preceding claims, characterised in that for the purpose of matching the length of the pipes, one or more fuel injection pipes (19, 20) is or are guided through a bore in the cylinder head (16).

6. Method according to one of the preceding claims, characterised in that the temperature differential between the combustion air and the excess air (2) rotating around the combustion zone (1) is reinforced by supercharging and charge cooling.

7. Method according to one of the preceding claims, characterised in that the motor is cooled only with lubricant or motor oil.

8. Method according to one of the preceding claims, characterised in that during firing of the cylinder, the pressure increase speed is kept constant.

## Revendications

1. Procédé pour faire fonctionner un moteur Diesel à injection directe avec plusieurs injecteurs, dans lequel l'air dans la chambre de combustion (1, 2) est mis en rotation et, pour accélérer le processus de mélange, est approvisionné en combustible par un nombre d'injecteurs (5, 6) tel que même des combustibles comme des huiles végétales difficilement vaporisables sont vaporisés avant que des températures qui entraînent la formation de noir de fumée ne soient atteintes dans la chambre de combustion (1, 2), caractérisé en ce qu'un procédé de combustion duothermique est utilisé, une zone de combustion centrale (1), entourée par une zone (2) avec un excédent d'air plus froid, étant créée par le fait que la rotation de l'air de la chambre de combustion est fixée à un niveau suffisamment élevé pour que le combustible injecté de l'extérieur, du bord de la chambre de combustion vers l'intérieur, dans la zone de combustion (1), soit dévié avant d'atteindre la paroi opposée (3) de la chambre de combustion, et soit ainsi maintenu en suspension suffisamment longtemps pour que même des combustibles difficilement vaporisables soient tenus éloignés de la paroi (3) de la chambre de combustion jusqu'à vaporisation complète, et en ce que, pour diminuer l'émission de bruit, la loi d'injection pour les injecteurs (5, 6) est choisie telle que la montée de la pression pendant la combustion par degré d'angle de vilebrequin n'est pas supérieure au taux maximal d'augmentation de la pression (Dp/Da) pendant la course de compression.

2. Procédé selon la revendication 1, caractérisé en ce que, parmi les injecteurs (5, 6), au moins l'un d'eux a un téton d'étranglement pour la commande de la section d'injection.

3. Procédé selon la revendication 2, caractérisé en ce que le début de l'injection des injecteurs (5, 6) est décalé dans le temps et est réglé sur une allure constante de l'augmentation de la pression (Δp/Δα), à l'aide de la section d'injection qui peut être commandée grâce au téton d'étranglement.

4. Procédé selon la revendication 3, caractérisé en ce que le décalage dans le temps du début de l'injection des injecteurs (5, 6 ; 17, 18) est produit par des conduits d'injection de combustible (19, 20) de différentes longueurs.

5. Procédé selon l'une des revendications précédentes, caractérisé en ce qu'un ou plusieurs conduits d'injection de combustible (19, 20) sont guidés par une forure dans la culasse (16) pour l'adaptation de la longueur des conduits.

6. Procédé selon l'une des revendications précédentes, caractérisé en ce que la différence de température entre l'air de combustion et l'excédent d'air (2) qui tourne autour de la zone de combustion (1) est amplifiée par suralimentation et refroidissement de la charge.

7. Procédé selon l'une des revendications précédentes, caractérisé en ce que le moteur n'est refroidi que par l'huile de lubrification ou l'huile à moteur.

8. Procédé selon l'une des revendications précédentes, caractérisé en ce que la vitesse d'augmentation de la pression est maintenue constante pendant la chauffe du cylindre.
